# EUROPÄISCHE PATENTANMELDUNG

(11) **EP 1 031 744 A2**
(43) Veröffentlichungstag der Anmeldung: **30.08.2000**
(21) Anmeldenummer: 00102374.6
(22) Anmeldetag: 04.02.2000
(51) Int. Cl.: F16C 9/04

(54) **Bruchtrennbares Maschinen-Bauteil**

(30) Priorität: 16.02.1999 DE 19906436
(71) Anmelder: Bayerische Motoren Werke Aktiengesellschaft, 80809 München (DE)
(72) Erfinder: Heider, Johann-Karl, 85256 Vierkirchen (DE)

(57) **Zusammenfassung**

Für ein bruchtrennbares Maschinen-Bauteil für eine paßgenaue, insbesondere lösbare Wiedervereinigung über die Bruchtrennflächen, die zwischen einer Durchbrechung und benachbarten Begrenzungen des Bauteiles erzeugt sind, wobei in der Durchbrechung diametral angeordnete Kerben der Brucheinleitung dienen, wird zur Vermeidung einer fehlerhaften, die Bruchtrennflächen schädigenden Montage vorgeschlagen, daß die Kerben relativ zueinander höhenversetzt angeordnet sind für ungleiche Lagen der Bruchtrennflächen zur optischen Erkennung der zusammengehörigen, korrespondierenden Bruchtrennflächen-Paare.

## Beschreibung

Die Erfindung bezieht sich nach dem Oberbegriff des Patentanspruches 1 auf ein bruchtrennbares Maschinen-Bauteil zur paßgenauen Wiedervereinigung über die Bruchtrennflächen, insbesondere einer lösbaren Wiedervereinigung, wobei das in Querschnitten zwischen einer Bauteil-Durchbrechung und benachbarten BauteilBegrenzungen bruchtrennbare Bauteil mit einer gesteuerten Bruchauslösung dienenden Kerben in gegenüberliegender Anordnung im Bereich einer zur Bruchkraftrichtung orthogonalen Mittenebene der Bauteil-Durchbrechung versehen ist.

So ist es beispielsweise zum Bruchtrennen eines Lagerdeckels vom großen Lagerauge eines Pleuels gemäß der EP-A 0 304162 bekannt, jeweils zur Mittenebene symetrisch ausgebildete, V-förmige Kerben vorzusehen, die einer Brucheinleitung dienen für im wesentlichen im Bereich der Mittenebene verlaufenden Bruchtrennflächen an beiden Bauteilen. Weiter ist es aus der DE 38 06 236 C1 bekannt, derartige V-förmige Kerben im weiteren Herstellungsprozeß durch Schmieden bis auf eine haarrißartige Gestaltung zu schließen, um damit bei der Bruchkraft-Einleitung die Bruchtrennung noch gezielter beeinflussen zu können. Schließlich beschreibt die DE 44 13 255 A1 ein Verfahren zum Bruchtrennen eines Lagerdeckels vom Lagerstuhl einer Kurbelwellenlagerung einer Hubkolbenmaschine, wobei die Bruchtrennflächen unter einem stumpfen Winkel ausgebildet werden, wobei dieser Winkel zur Bruchkraftrichtung symetrisch vorgesehen ist.

Mit dem Verfahren des Bruchtrennens eines Maschinen-Bauteiles ist in vorteilhafter Weise eine paßgenaue Wiedervereinigung der Bauteile über die Bruchtrennflächen erzielt, so daß zusätzliche Paßeinrichtungen entfallen. Der Nachteil der bekannterweise bruchgetrennten Bauteile ist jedoch, daß die miteinander korrespondierenden Bruchtrennflächen der beiden Bauteile vom Augenschein her nicht ohne weiteres erkennbar sind, so daß auch bei gegebenenfalls vorgesehener Kennzeichnung der beiden Bauteile vor dem Bruchtrennen eine fehlerhafte Montage der bruchgetrennten Bauteile nicht auszuschließen ist.

Der Erfindung liegt die Aufgabe zugrunde, für das Bruchtrennen eine Maßnahme zur optischen Erkennung zusammengehöriger bzw. korrespondierender Bruchtrennflächen-Paare aufzuzeigen.

Diese Aufgabe ist mit dem Patentanspruch 1dadurch gelöst, daß die Kerben relativ zueinander höhenversetzt angeordnet sind. Mit der Erfindung sind in vorteilhafter Weise mittels der höhenversetzten Kerben relativ zur Mittenebene parallel höhenversetzte Paare korrespondierender Bruchtrennflächen erzielt. Für den Höhenversatz ist zweckmäßigerweise ein Maß gewählt, das entweder die gestufte Anordnung der Bruchtrennflächen durch Augenschein erkennbar ist oder aber das falsch gefügte Bauteil durch seine Schiefstellung ebenfalls durch Augenschein sofort erkennbar ist oder gegebenenfalls bei einer lösbaren Wiedervereinigung für eine Verschraubung die Schraubbolzen nicht im Mutterngewinde des einen Bauteils durch ihre Schiefstellung greifen können.

Gleiches gilt auch für eine weitere Ausgestaltung, bei der mittels der höhenversetzten Kerben miteinander einen stumpfen Winkel einschließende Paare korrespondierender Bruchtrennflächen vorgesehen sind, wobei die gemittelten Winkeischenkel der Bruchtrennflächen sich außermittig der Bruchkraftrichtung schneiden.

Eine die Erfindung vorteilhaft, unterstützende Kerbenform ist in der internationalen Anmeldung WO 97/22430 gezeigt und beschrieben, wobei die Kerben aus eng benachbart angeordneten, lasergebohrten Sacklöchern mit zumindest abschnittsweise durchgehärteten Stegen zur Starterrißbildung gebildet sind. Damit sind gezielt parallel höhenversetzt ausgebildete Paare von korrespondierenden Bruchtrennflächen sowie auch zueinander geneigt verlaufende Paare von Bruchtrennflächen mit zur Bruchkraftrichtung verschobenem Winkel erreicht.

Die Erfindung ist anhand von in der Zeichnung dargestellten Beispielen beschrieben. Es zeigt
- Figur 1: ein abschnittsweise gezeigtes Pleuel mit einem im großen Lagerauge durch höhenversetzt angeordnete Kerben bruchgetrennten Lagerdeckel,
- Figur 2: einen von einem Lagerstuhl einer Kurbelwellenlagerung einer nicht näher gezeigten Hubkolbenmaschine bruchgetrennten Lagerdeckel, dessen Bruchtrennflächen einen stumpfen, versetzten Winkel aufweisen.

Ein bruchtrennbares Maschinen-Bauteil 1 ist beispielsweise als Pleuel 2 gestaltet, bei dem von einem großen Lagerauge 3 ein Lagerdeckel 4 durch gezieltes Bruchtrennen gelöst ist zur paßgenauen Wiedervereinigung, wobei zur Halterung des Lagerdeckels 4 am Lagerauge 3 Schraubbolzen 5 dienen.

Das in Querschnitten 6, 6' zwischen einer Lager-Durchbrechung 7 und benachbaden Begrenzungen 8, 8' des Lagerauges 3 bruchtrennbare Lagerauge 3 bzw. Maschinen-Bauteil 1 ist mit Kerben 9, 9' für eine gesteuerte Bruchauslösung ausgebildet, wobei die Kerben 9, 9' in gegenüberliegender Anordnung im Bereich einer zur Bruchkraftrichtung F_{B} orthogonalen Mittenebene 10 der Lager-Durchbrechung 7 vorgesehen sind.

Erfindungsgemäß sind die Kerben 9, 9' relativ zueinander um das Maß "h" höhenversetzt angeordnet. Mittels der höhenversetzten Kerben 9, 9' sind relativ zur Mittenebene 10 parallel höhenversetzte Paare korrespondierender Bruchtrennflächen 11, 11' und 12, 12' erzielt.

Mit dieser erfindungsgemäß gestuften Anordnung der Bruchtrennflächen 11 und 12 sowie der Bruchtrennflächen 11' und 12' ist eine durch Augenschein bzw. optische Erkennung erfaßbare Gestaltung bzw. Anordnung der Bruchtrennflächen-Paare 11, 11' und 12, 12' erzielt, durch die eine die Bruchtrennflächen schädigende, fehlerhafte Montage vermieden ist. Ist die stufenförmige Anordnung der Bruchtrennflächen-Paare 11,11' und 12,12' nicht stark ausgeprägt, so kann bei fehlerhafter Montage des Lagerdeckels 4 dessen Schiefstellung erkannt werden, wobei ggf. bei einem Versuch der Verschraubung des Lagerdeckels 4 mit dem übrigen Lagerauge 3 durch die nicht ein Mutterngewinde 13 im Lagerauge 3 fassenden Schraubbolzen 5 ein weiterer Hinweis auf eine fehlerhafte Montage gegeben ist.

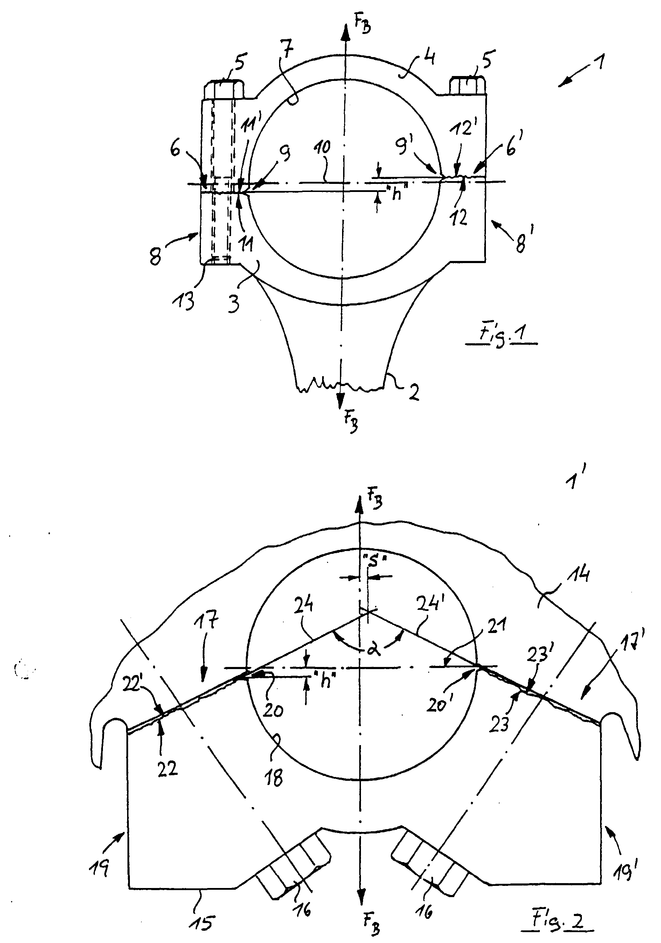

Wie aus der Figur 1 ersichtlich, ist die Kerbe 9 diesseits der Mittenebene 10 und die Kerbe 9' jenseits der Mittenebene 10 angeordnet. Mit der zu beiden Seiten der Mittenebene 10 versetzt angeordneten Kerben 9 und 9' ist der für das Bruchtrennen günstige Umstand der flächengleichen Querschnitte 6 und 6' zu realisieren.

Das in der Figur 2 gezeigte Maschinen-Bauteil 1' ist als ein Lagerstuhl 14 für eine Kurbelwellenlagerung einer Hubkolbenmaschine gestaltet mit einem durch Bruchtrennen lösbaren Lagerdeckel 15 zur paßgenauen Wiedervereinigung mittels der Schraubbolzen 16.

Das in Querschnitten 17, 17' zwischen einer Lager-Durchbrechung 18 und benachbaden Begrenzungen 19, 19' bruchtrennbare Maschinen-Bauteil 1' bzw. Lagerstuhl 14 ist mit einer gesteuerten Bruchauslösung dienenden Kerben 20, 20' ausgebildet, wobei die Kerben 20, 20' in gegenüberliegender Anordnung im Bereich einer zur Bruchkraftrichtung F_{B} orthogonalen Mittenebene 21 der Lager-Durchbrechung 18 erfindungsgemäß ebenfalls relativ zueinander um das Maß "h" höhenversetzt angeordnet sind. Erfindungsgemäß wird hierbei vorgeschlagen, daß mittels der höhenversetzten Kerben 20 und 20' miteinander einen stumpfen Winkel α < 180° einschließende Paare korrespondierender Bruchtrennflächen 22, 22' und 23, 23' erzeugt sind, deren gemittelte Winkelschenkel 24 und 24' sich außermittig der Bruchkraftrichtung F_{B} schneiden. Der um das Maß "s" vorgesehene Versatz des Schnittpunktes der Winkelschenkel 24 und 24' ergibt in vorteilhafter Weise die Möglichkeit, die Zusammengehörigkeit korrespondierender Bruchtrennflächen 22, 22' und 23, 23' bei einer Fehlmontage durch Schiefstellung des Lagerdeckels 15 und/oder im Mutterngewinde des Lagerstuhles 14 nicht greifende Schraubbolzen 16 zu erkennen. Ferner ist die Erkenntnis auch durch die unterschiedliche Höhenlage der V-förmig gestalteten Kerben 20, 20' möglich, von denen die Kerbe 20' auf der Mittenebene 21 liegt und die gegenüberliegende Kerbe 20 um das Maß "h" tiefer angeordnet ist.

Das Maß des Höhenversatzes der einander gegenüberliegenden Kerben 9, 9' bzw. 20, 20' beträgt zweckmäßigerweise zwischen 2 bis 4 mm.

In den Figuren 1 und 2 sind die Kerben 9, 9' und 20, 20' beispielsweise jeweils V-förmig gestaltet. Eine das Bruchtrennen vorteilhaft unterstützende Kerben-Gestaltung ist in der veröffentlichten PCT-Anmeldung WO 97/22430 vorgeschlagen, wonach die Kerben 9, 9' und 20, 20' auch aus eng benachbart angeordneten, lasergebohrten Sacklöchern mit zumindest abschnittsweise durchgehärteten Stegen zur Starterrißbildung gebildet sind.

Mit der Erfindung ist eine auf vorteilhaft einfache Weise gestaltete Sicherungs-Maßnahme gegen eine fehlerhafte Montage eines bruchgetrennten Bauteiles aufgezeigt.

## Patentansprüche

1. Bruchtrennbares Maschinen-Bauteil zur paßgenauen Wiedervereinigung über die Bruchtrennflächen, insbesondere einer lösbaren Wiedervereinigung,
- wobei das in Querschnitten (6, 6'; 17, 17') zwischen einer BauteilDurchbrechung (7, 18) und benachbarten Bauteil-Begrenzungen (8, 8'; 191 19') bruchtrennbare Bauteil (1 bzw. 3; 1' bzw. 14) mit einer gesteuerten Bruchauslösung dienenden Kerben (9, 9'; 20, 20') in gegenüberliegender Anordnung im Bereich einer zur Bruchkraftrichtung (F_{B}) orthogonalen Mittenebene (10, 21) der Bauteil-Durchbrechung (7, 18) versehen ist,
**dadurch gekennzeichnet**,
- daß die Kerben (9, 9'; 20, 20') relativ zueinander höhenversetzt (h) angeordnet sind.

2. Maschinen-Bauteil nach Anspruch 1, **dadurch gekennzeichnet**, daß mittels der höhenversetzten Kerben (9, 9') relativ zur Mittenebene (10) parallel höhenversetzte Paare korrespondierender Bruchtrennflächen (11, 11' und 12, 12') erzielt sind.

3. Maschinen-Bauteil nach Anspruch 1, **dadurch gekennzeichnet**, daß mittels der höhenversetzten Kerben (20, 20') miteinander einen stumpfen Winkel (α < 180°) einschließende Paare korrespondierender Bruchtrennflächen (22, 22'; 23, 23') deren gemittelte Winkelschenkel (24, 24') sich außermittig der Bruchkraftrichtung (F_{B}) um ein vorbestimmtes Maß (s) versetzt schneiden.

4. Maschinen-Bauteil nach einem der Ansprüche 1 bis 3, **dadurch gekennzeichnet**, daß die Kerben (9, 9'; 20, 20') aus eng benachbart angeordneten, lasergebohrten Sacktöchern mit zumindest abschnittsweise durchgehärteten Stegen zur Starterrißbildung gebildet sind.
